# EUROPEAN PATENT APPLICATION

(11) **EP 4 838 655 A1**
(43) Date of publication of application: **11.11.2026**
(21) Application number: 25175528.6
(22) Date of filing: 09.05.2025
(51) Int. Cl.: H01M 50/204, H01M 50/209, H01M 50/249, H01M 50/502, H01M 50/503, H01M 50/517, H02M 1/00, H01M 10/42, H01M 50/284

(54) **BATTERY ASSEMBLY FOR A VEHICLE, VEHICLE, CELL-LEVEL INVERTER UNIT, METHODS FOR MOUNTING AND DISMOUNTING A CELL-LEVEL INVERTER UNIT FROM A BATTERY ASSEMBLY FOR A VEHICLE**

(71) Applicant: Volvo Car Corporation, 405 31 Göteborg (SE)
(72) Inventor: BJÖRKHOLTZ, Jonas, 40531 Göteborg (SE); FORSSELL, Jonas, 40531 Göteborg (SE)
(74) Representative: Kransell & Wennborg KB

(57) **Abstract**

The disclosure relates to a battery assembly (12) for a vehicle (10), the battery assembly (12) comprising at least one battery cell unit (18) and at least one busbar (24) electrically coupled to the battery cell unit (18), wherein the at least one battery cell unit (18) comprises one or more battery cells (20), a connection component (52) mechanically and electrically connected to the one or more battery cells (20), and a cell-level inverter unit (22), wherein the cell-level inverter unit (22) is electrically connected to the connection component (12) and to the at least one busbar (24) via a plug-in connection (60) such that the cell-level inverter unit (22) may be selectively electrically connected or separated from the connection component (52) and the at least one busbar (24) by moving the cell-level inverter unit (22) along an assembly direction (44). The invention further relates to the cell-level inverter unit (22), a vehicle (10) and methods for mounting and dismounting the cell-level inverter unit (22).

## Description

### TECHNICAL FIELD

The present disclosure relates to a battery assembly for a vehicle.

Further, the present disclosure relates to a vehicle with the battery assembly.

Moreover, the present disclosure relates to a cell-level inverter unit for the battery assembly.

In addition, the present disclosure relates to a method for mounting the cell-level inverter unit in the battery assembly.

Furthermore, the present disclosure relates to a method for dismounting the cell-level inverter unit from the battery assembly.

### BACKGROUND ART

Battery assemblies for vehicles are known in the prior art. They are typically used in a drivetrain of an electric vehicle to provide electric power for the propulsion of said vehicle. Furthermore, the electric power provided by the battery assembly can also be used for other applications such as for powering an infotainment system, onboard lights and air conditioning of the vehicle.

Recently, there is a trend to add more functionality to the battery assembly to obtain a more versatile and efficient battery assembly. However, these measures render the battery assembly more complex because increased functionality is usually achieved by integrating more complex electronic components to the battery assembly.

### SUMMARY

Consequently, there is also a need to provide measures that allow simple and cost-effective maintenance of the battery assembly.

The problem is at least partially solved or alleviated by the subject matter of the independent claims of the present disclosure, wherein further examples are incorporated in the dependent claims.

According to a first aspect, there is provided a battery assembly for a vehicle. The battery assembly comprises at least one battery cell unit and at least one busbar element electrically coupled to the battery cell unit. The at least one battery cell unit comprises one or more battery cells, a connection component mechanically and electrically connected to the one or more battery cells, and a cell-level inverter unit. The cell-level inverter unit is electrically connected to the connection component and to the at least one busbar element via a plug-in connection such that the cell-level inverter unit may be selectively electrically connected or separated from the connection component and the at least one busbar element by moving the cell-level inverter unit along an assembly direction.

The core idea behind the present disclosure is to provide a battery assembly which can be serviced and/or inspected in a technical simple and efficient manner. This applies in particular to the cell-level inverter unit which can be mounted and dismounted from the battery assembly by simply performing a linear movement of the cell-level inverter unit along the assembly direction. The linear movement allows to selectively electrically connect and selectively electrically disconnect the cell-level inverter unit from the battery cell unit and the busbar element. This may be done without using additional tools or other equipment. This reduces the complexity of maintenance of the battery assembly. In particular, by using a simple plug-in connection, the cell-level inverter unit can be easily mounted and dismounted which allows simple maintenance of the cell-level inverter unit. For example, the cell-level inverter unit may be dismounted from the battery assembly by simply pulling the cell-level inverter unit along the assembly direction. On the other hand, the cell-level inverter unit can be easily electrically connected to the busbar element and to the connection component by pushing the cell-level inverter unit along the assembly direction to establish the plug-in connection. Consequently, there are at least two plug-in connections present, namely one for establishing an electrical connection between the connection component of the one or more battery cells and the cell-level inverter unit and one for establishing an electrical connection between the busbar element and the cell-level inverter unit. The plug-in connections are arranged in such a way that the cell-level inverter unit can be electrically connected to both, namely to the connection component of the one or more battery cells and to the busbar element, by moving the cell-level inverter unit along the assembly direction. This allows to perform a maintenance of an electrical component represented by the cell-level inverter unit in a fast and technically simple manner. Moreover, this reduces the complexity of the battery assembly.

The plug-in-connection provides a reliable and robust connection for coupling electrical components. In particular, the plug-in-connection allows that the connection component and the busbar element may be assembled and disassembled with the cell-level inverter unit multiple times. This provides the advantage that the cell-level inverter unit can be disconnected from the electric counterpart and connected to the electric counterpart in a simple manner.

The cell-level inverter unit may be configured to control an operation of a battery cell unit. For example, the cell-level inverter unit may be configured to convert a DC output of the one or more battery cells into AC by using a printed circuit board. Furthermore, the cell-level inverter unit may also be configured to provide isolated DC output from the one or more battery cells which can be used for auxiliary loads such as onboard lights, infotainment and suchlike. Optionally, the printed circuit board comprises one or more DC-DC converters such that a DC output may be provided at a voltage different from the DC input provided by the one or more battery cells.

The term "assembly direction" means that the cell-level inverter unit and the connection component of the one or more battery cells are arranged on a common assembly axis and that the cell-level inverter unit and the busbar element are arranged on a common assembly axis, wherein both assembly axes are arranged parallel to each other. Therefore, the busbar element and the connection component of the one or more number battery cells can be electrically connected or disconnected from the cell-level inverter unit by moving the cell-level inverter unit along the assembly direction. In other words, each of the plug-in connections has their own assembly axis which are arranged parallel to each other.

The connection component of the one or more battery cells may be designated as an electric counterpart which is configured to establish a plug-in connection with the cell-level inverter unit. The connection component may be designated as the male part or female part of the plug-in connection. Preferably, the connection component may be designated as the male part of the plug-in connection.

The cell-level inverter unit may comprise at least two plug-in elements which are configured to establish a plug-in connection with the connection component of the one or more battery cells and the busbar element, respectively. The plug-in element may be designated as the male or female part of the plug-in connection. The plug-in element may preferably be designated as female part of the plug-in connection.

Furthermore, the cell-level inverter unit may comprise more than two plug-in elements which are configured to establish additional plug-in connections with further busbar elements and/or connection components. Preferably, at least some, more preferably each of the plug-in connections of the same cell-level inverter unit has an assembly direction, wherein the assembly directions are arranged parallel to each other. Even more preferably, each of the plug-in connections has an assembly axis, wherein the assembly axes are arranged in a common assembly plane.

The busbar element may comprise an electric counterpart which is configured to establish a plug-in connection with the cell-level inverter unit. The electric counterpart may be designated as the male part or female part of the plug-in connection. The electric counterpart may be preferably designated as male counterpart. More preferably, the busbar element comprises structurally the same counterpart as the connection component. Even more preferably, the busbar element is the electric counterpart. This provides a structurally simple busbar element.

According to an example, the battery assembly offers only one possibility for mounting and dismounting the cell-level inverter unit from the battery assembly which is in accordance with the Poka-yoke principle which facilitates the maintenance of the battery assembly. Thus, it is prevented that the cell-level inverter unit can be mounted or dismounted in an incorrect manner.

In an example, each battery cell unit further comprises a frame with a slot-shaped recess in which the cell-level inverter unit is accommodated. The slot-shaped recess is open along the assembly direction.

The frame of the slot-shaped recess provides the advantage that the cell-level inverter unit can be easily accessed for service or repair. Moreover, the cell-level inverter unit is well protected from environmental influences inside the slot-shaped recess. Optionally, the slot-shaped recess is shaped in accordance with the poka-yoke principle which defines a mounting or dismounting direction of the cell-level inverter unit in terms of the assembly direction. Thus, it is prevented that the cell-level inverter unit can be mounted or dismounted in an incorrect manner. This reduces the complexity of maintenance of the battery assembly. Moreover, the frame is structurally simple and can be produced in a simple and cost effective manner.

The term "frame" designates a part or component that is mountable on at least the connection component of a battery cell unit and is configured to accommodate a cell-level inverter unit. In an example, the frame is formed as a housing or a part of a housing. In another example, the frame may be or comprise a housing with only one opening such that the slot-shaped recces may be accessible only from one side only. Again in another example, the frame may be a bracket which is accessible from more than two sides. In this case the frame may be U-shaped.

The reason for the slot-shaped recess is that the cell-level inverter unit may comprise electrical components such as a PCB board which are typically plate-shaped. Therefore, the cell-level inverter unit can be accommodated in the frame in a space-efficient manner.

In an example, the cell-level inverter unit or the frame comprises at least one locking element configured to selectively lock the cell-level inverter unit in the slot-shaped recess.

In other words, the cell-level inverter unit is attachable or holdable in the slot-shaped recess without risking to lose the cell-level inverter unit. Still in other words, the cell-level inverter unit is mechanically locked in this slot-shaped recess by the at least one locking element. This provides the advantage that the cell-level inverter unit does not fall off from the battery assembly.

The locking element may be configured to reversibly lock the cell-level inverter unit in the slot shaped recess. For example, the locking element may be a glue connection, a plug-in-connection, a snap-in-connection, a bayonet mount, a spring-loaded connection, a magnetic connection or a screw connection.

In an example, a plurality of battery cell units are electrically interconnected via a plurality of busbar elements. The assembly directions of the respective cell-level inverter units extend in parallel. Additionally or alternatively, at least some of the cell-level inverter units are arranged along an arrangement direction.

The parallel arrangement of the assembly directions of the respective cell-level inverter units provides the advantage that each cell-level inverter unit has the same assembly direction. As the assembly direction is the same for at least some cell-level inverter units, the maintenance of the battery cell assembly can be performed in a time-efficient and technical simple manner. At least some of the cell inverter units being arranged along an arrangement direction provides the advantage that the cell-level inverter units can be arranged in a space-efficient manner inside the battery assembly.

Preferably, the assembly direction and arrangement direction are arranged orthogonally to each other. This provides a structurally simple arrangement of the cell-level inverter units with respect to the busbar elements.

In an example, the battery assembly further comprises an enclosure housing the one or more battery cell units. In other words, the one or more battery cell units are enclosed by the enclosure. The enclosure comprises one maintenance opening per cell-level inverter unit configured for withdrawing the cell-level inverter unit from the associated battery cell unit. Alternatively, the enclosure comprises one maintenance opening for a plurality of cell-level inverter units configured for withdrawing the associated cell-level inverter units.

The enclosure provides the advantage that the one or more battery cell units are protected from environmental influences such as dust or water. Moreover, the maintenance opening provides access to the cell-level inverter units such that the cell-level inverter units can be withdrawn from the enclosure in a simple manner. In particular, it is of advantage that the enclosure comprises one maintenance opening for a plurality of cell-level inverter units. This facilitates the maintenance of the cell-level inverter units because all cell-level inverter units can be withdrawn from just one maintenance opening.

In an example, the maintenance opening is closed by a lid.

The lid is a structurally simple component to close the maintenance opening.

Preferably, the lid can be reversibly attached to the maintenance opening which allows that the lid can be attached and detached from the maintenance opening multiple times. This allows to perform a time- and cost-efficient maintenance of the cell-level inverter units because only a lid has to be removed to gain access to the maintenance opening and to the cell-level inverter unit.

For example, the lid may be reversibly attached to the enclosure housing using a glue connection, a plug-in-connection, a snap-in-connection, a bayonet mount, a spring-loaded connection, a magnetic connection or a screw connection.

In an example, the maintenance openings are facing downwards in a use orientation of the battery assembly.

The aforementioned orientation of the maintenance openings is in particular of advantage because the maintenance openings are then accessible from the bottom of the vehicle, i.e. from underneath the vehicle. This is because the battery assembly is typically arranged at the bottom, i.e. under a passenger cabin, of the vehicle. Thus, the above orientation of the battery assembly enables a good access to the maintenance opening via the bottom of the vehicle.

According to a second aspect, there is provided a vehicle comprising the battery assembly according to the present disclosure.

The battery assembly of the vehicle has increased functionality by using one or more electrical components such as the cell-level inverter units. Additionally, the battery assembly allows for a simple maintenance of the cell-level inverter unit by using the above described plug-in connection between the cell-level inverter unit and the busbar element and the connection component, respectively. Therefore, maintenance of the vehicle is facilitated.

According to a third aspect, there is provided a cell-level inverter unit for a battery assembly according to the present disclosure. The cell-level inverter unit comprises a plug-in element for plugging the cell-level inverter unit into the connection component and onto the at least one busbar element.

The above described cell-level inverter unit can be easily mounted in the battery cell assembly, in particular, electrically connected to the connection component of the one or more battery cells and the at least one busbar element via plug-in connections using the plug-in element. In other words, the cell-level inverter unit may be designated as an exchange component which can be removed from the remaining components in a technically simple and efficient manner.

The plug-in element may be the male part or the female part of the plug-in connection.

Preferably, the plug-in element may be the female part of the plug-in connection.

For example, the plug-in-element may comprise a clamping unit with a first clamping arm and a second clamping arm for establishing a plug-in-connection with an electric counterpart by receiving the electric counterpart between the first clamping arm and the second clamping arm. The electric counterpart may be the connection element of the one or more battery cells and/or the busbar element.

The clamping unit may be configured to flexibly hold the counterpart in an assembled state of the plug-in-connection. In particular, the first clamping arm and the second clamping arm may be configured to be flexibly bent towards and away from each other. This flexible arrangement of the first clamping arm and the second clamping arm allows to receive and release the counterpart between the first clamping arm and the second clamping arm. This reduces the risk of breaking the first clamping arm and/or second clamping arm.

According to an example, the portion of the counterpart which is received between the first clamping arm and the second clamping arm is thicker than a distance between the first clamping arm and the second clamping arm is before receiving this portion of the counterpart therebetween. Thus, when receiving the counterpart between the first clamping arm and the second clamping arm, the first clamping arm and the second clamping arm are moved away from one another, thereby creating an elastic reaction force such that both the first clamping arm and the second clamping arm push or press against the counterpart.

The counterpart may have a plate-shaped body. One side of the plate-shaped body may be tapering.

According to a fourth aspect, there is provided a method for dismounting a cell-level inverter unit from a battery assembly for a vehicle. The battery assembly comprises at least one battery cell unit and at least one busbar element electrically coupled to the battery cell unit. The at least one battery cell unit comprises one or more battery cells, a connection component mechanically and electrically connected to the one or more battery cells, and a cell-level inverter unit. The cell-level inverter unit is electrically connected to the connection component and to the at least one busbar element. The method comprises: un-plugging the cell-level inverter unit from the connection component and the busbar element by moving the cell-level inverter unit along an assembly direction.

The idea behind the above method is that the cell-level inverter unit can be easily dismounted from the battery assembly by a single movement, namely by unplugging the cell-level inverter unit from the connection component and the busbar element by moving the cell-level inverter unit along an assembly direction. This is mainly achieved by using the plug-in connections between the cell-level inverter unit and the connection component of the one or more battery cells and the busbar element. It is therefore ensured that the cell-level inverter unit can also be unplugged, but only in one direction, which provides a failsafe unplugging method for the cell-level inverter unit.

In an example, the method further comprises: removing a lid from an enclosure of the battery assembly.

This ensures that the cell-level inverter unit is well protected from environmental influences, e.g. dust and water. The step of removing of the lid is therefore of advantage to gain access to the cell-level inverter unit.

In an example, the assembly direction is oriented substantially vertically.

The reason for orienting the assembly direction substantially vertically is that such an orientation facilitates a withdrawal of the cell-level inverter unit from the maintenance opening and the battery assembly as the cell-level inverter unit is typically arranged at the bottom of the vehicle. Therefore, providing an assembly direction which is aligned substantially vertically is of advantage for gaining access to the cell-level inverter unit.

According to a fifth aspect, there is provided a method for mounting a cell-level inverter unit in a battery assembly for a vehicle. The battery assembly comprises at least one battery cell unit and at least one busbar element electrically coupled to the battery cell unit. The at least one battery cell unit comprises one or more battery cells and a connection component mechanically and electrically connected to the one or more battery cells. The method comprises: plugging the cell-level inverter unit into the connection component and onto the at least one busbar element, by moving the cell-level inverter unit along an assembly direction.

The idea behind the above method is that the cell-level inverter unit can be easily mounted in the battery assembly by a single movement, namely by plugging the cell-level inverter unit to the connection component and the busbar element by moving the cell-level inverter unit along an assembly direction. This is mainly achieved by using the plug-in connections between the cell-level inverter unit and the connection component of the one or more battery cell and the busbar element. It is therefore ensured that that the cell-level inverter unit can also be plugged but in only one direction which provides a failsafe unplugging method for the cell-level inverter unit.

In an example, the method further comprises: closing an enclosure of the battery assembly using a lid.

This ensures that the cell-level inverter unit is well protected from environmental influences, e.g. dust and water.

In an example, the assembly direction is oriented substantially vertically.

The reason for orienting the assembly direction substantially vertically is that such an orientation facilitates mounting of the cell-level inverter unit via the maintenance opening and the battery assembly as the cell-level inverter unit is typically arranged at the bottom of the vehicle. Therefore, providing an assembly direction which is aligned substantially vertical is of advantage for gaining access to the location where the cell-level inverter unit is to be mounted.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic view of a vehicle according to the present disclosure, wherein the vehicle comprises a battery assembly according to the present disclosure;
- Figure 2: shows a top view of the battery assembly of Fig. 1, wherein a top cover of the battery assembly is not represented;
- Figure 3: shows a bottom view of a portion of the battery assembly of Fig. 2;
- Figure 4: shows a magnified view of detail B of Fig. 3, the detail B showing a plurality of cell-level inverter units according to the present disclosure of the battery assembly from Fig. 3;
- Figure 5: shows a magnified view of detail A of Fig. 2, the detail A showing a perspective view of a battery cell unit of the battery assembly from Fig. 2 in an assembled state;
- Figure 6: shows a perspective view of the battery cell unit of Fig. 5 in a disassembled state;
- Figure 7: shows a perspective view of the battery cell unit of Figs. 5 and 6 during a mounting or dismounting step of a cell-level inverter unit according to the present disclosure;
- Figure 8: shows a view along the cross-sectional plane A-A of Fig. 2 of the battery assembly;
- Figure 9: shows a schematic flow diagram of a method for mounting a cell-level inverter unit in a battery assembly; and
- Figure 10: shows a schematic flow diagram of a method for dismounting a cell-level inverter unit from a battery assembly.

### DETAILED DESCRIPTION

The Figures are merely schematic representations and serve only to illustrate examples of the disclosure. Identical or equivalent elements are in principle provided with the same reference signs.

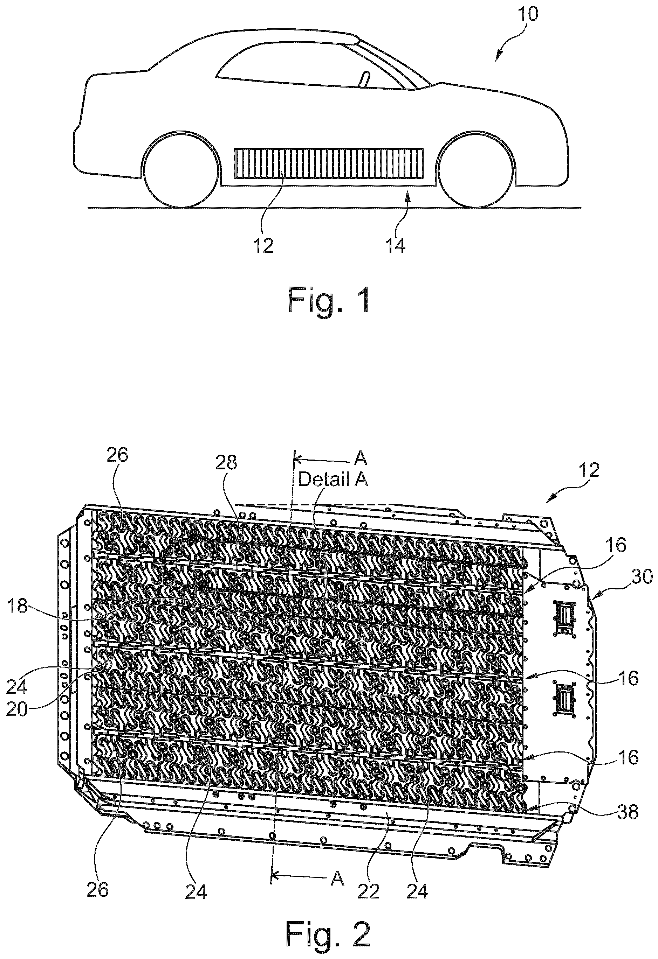

Figure 1 shows a vehicle 10, the vehicle 10 comprising a battery assembly 12.

As illustrated in Figure 1, the battery assembly 12 may be located at a bottom 14 of the vehicle 10.

The battery assembly 12 is configured for the propulsion of the vehicle 10. Therefore, the battery assembly 12 may be part of a drivetrain, in which the battery assembly 12 is coupled with an electric motor (not shown).

As shown in Figure 2, the battery assembly 10 comprises three battery strings 16, which are aligned adjacent to each other. Each battery string 16 is adapted to provide power for one electric phase of the electric motor.

To be specific, each battery string 16 comprises a plurality of battery cell units 18.

Each battery cell unit 18 comprises one or more battery cells 20, which are electrically coupled with each other to provide electric power. In particular, the battery cells 20 may be electrically series-connected.

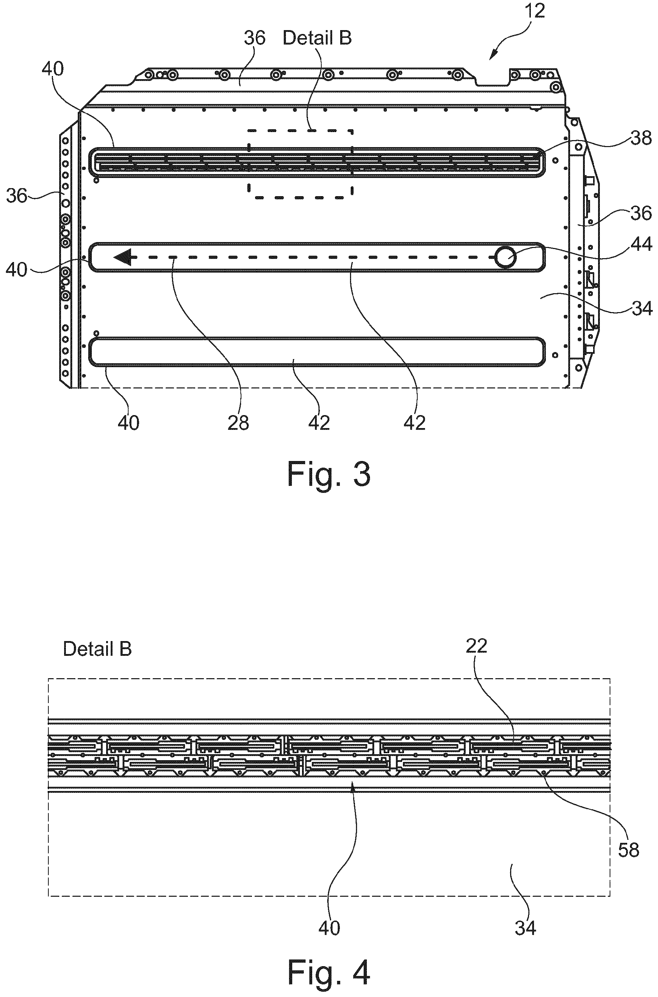

Further, each battery cell unit 18 comprises a cell-level inverter unit 22 which is electrically coupled to two busbars 24 electrically connecting the battery cell unit 18 with two neighboring battery cell units 18. As Fig. 2 shows a top view of the battery assembly 12, the cell-level inverter units 22 are not visible as they are arranged underneath the busbars 24. The cell-level inverter units 22 can be seen in the bottom views of the battery assembly 12 shown in Figs. 3 and 4.

The busbars 24 are elongated components arranged in the center of each battery string 16.

The busbars 24 may be made of an electrically conductive material. Preferably, the busbars 24 may be made of aluminum.

In more detail, each busbar 24 connects two neighboring battery cell units 18 with each other in series. This results in a string of interconnected battery cell units 18.

As can be seen from Fig. 2, the plurality of battery cell units 18 are electrically interconnected via a plurality of busbars 24 along an arrangement direction 28 of the respective cell-level inverter units 22. In fact, there are two arrangement directions 28 such that two rows of battery cell units 18 are arranged parallel with each other. This results in sum in a U-shaped current path which is achieved by using a busbar element 26 at the end of each battery string 16 which interconnects both rows of interconnected battery cell units 18 with each other.

Therefore, at least some of the cell-level inverter units 22 are arranged along the arrangement direction 28. In the embodiment shown in Figure 2, all cell-level inverter units 22 are arranged along the arrangement direction 28.

Each row of interconnected battery cell units 18 is connected with a terminal 30 which is configured to collect the electric current from each battery cell unit 18.

The battery assembly 12 further comprises an enclosure 32 to accommodate the one or more battery cell units 18. In other words, the enclosure 32 houses the one or more battery cell units 18.

In more detail, the enclosure 32 comprises a bottom wall 34 and side walls 36 which connect a top wall (not shown) to the bottom wall 34. The bottom wall 34 and the top wall are arranged opposite to each other. Together they form a closed battery chamber 38 in which the battery cell units 18 are accommodated.

The enclosure 32 is adapted to encapsulate the battery assembly 12 and, thus, protect the battery cell units 18 from the environment. In particular, the enclosure 32 may be water- and dust resistant.

In the embodiment shown in Fig. 2, the top wall is not shown to enable a clear view onto the battery assembly 12.

Figure 3 shows a view of the bottom wall 34. As it can be seen from Figure 3, the bottom wall completely covers a bottom side of the enclosure 32.

The enclosure 32 comprises at least one maintenance opening 40 for a plurality of cell-level inverter units 22 configured for withdrawing the associated cell-level inverter units 22.

Alternatively, the enclosure 32 comprises one maintenance opening 40 per cell-level inverter unit 22 configured for withdrawing the cell-level inverter 22 from the associated battery cell unit 18 (not shown).

In the embodiment shown in Figure 3, there are three maintenance openings 40, each maintenance opening 40 being assigned to one battery string 16 of the battery assembly 12.

In more detail, a projection of the maintenance opening 40 encompasses each of the cell-level inverter units 22 which are connected to the respective busbar 24 of the battery string 16.

The maintenance opening 40 may have an elongated shape, wherein the maintenance opening 40 extends parallel to the arrangement direction 28 of the cell-level inverter units 22.

As can be seen from Fig. 3, the maintenance opening 40 may be closed by a lid 42. In particular, the lid 42 may seal the maintenance opening 40 such that the battery assembly 12 is protected from environmental influences, e.g., from water or dust.

The lid 42 may be reversibly connected to the bottom wall 34. For example, the lid may attached to the bottom wall 34 via a glue connection, a plug-in-connection, a snap-in-connection, a bayonet mount, a spring-loaded connection, a magnetic connection or a screw connection.

Additionally, the maintenance openings 40 are facing downwards in a use orientation of the battery assembly 12. In other words, the maintenance openings 40 are accessible from the bottom 14 of the vehicle 10.

The cell-level inverter units 22 may be withdrawn from the maintenance opening 40 along an assembly direction 44 which is orthogonal to the arrangement direction 28. As there are a plurality of cell-level inverter units 22, the assembly directions 44 of the cell-level inverter units 22 are arranged parallel to each other.

From Figs. 3 and 4, it can be seen that the assembly direction 44 may be designated as an assembly axis which is orthogonal to a plane in which is defined by the maintenance opening 40.

From Figure 4, it can further be seen that each maintenance opening 40 allows free access to both rows of interconnected cell-level inverter units 22. The cell-level inverter units 22 are arranged pairwise along the arrangement direction 28.

In particular, the cell-level inverter units 22 are arranged between the busbar 24 and the bottom wall 34. Thus, the busbar 24 is arranged between the cell-level inverter units 22 and the top wall.

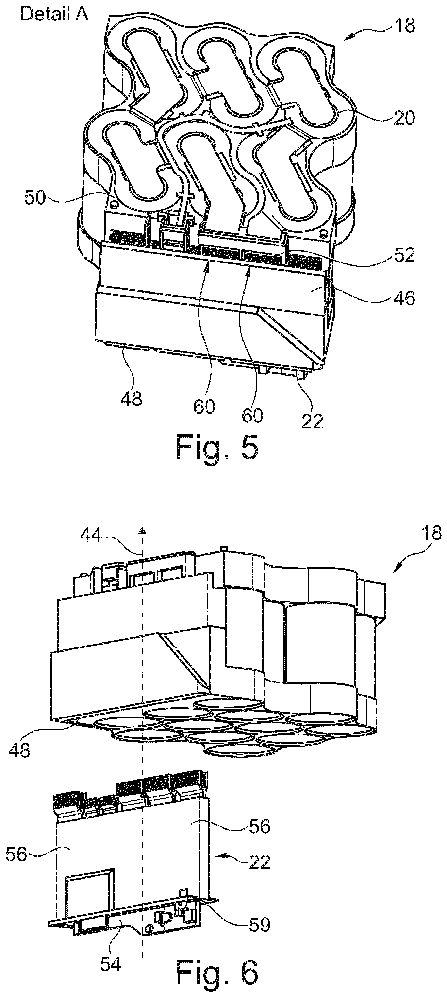

Turning to Figure 5, the structure of a single battery cell unit 18 is described in more detail.

In principle, the battery cell unit 18 comprises one or more battery cells 20 which are electrically connected with each other, and the cell-level inverter unit 22. In the embodiment shown in Figure 5, the battery cell unit 18 comprises twelve battery cells 20.

To accommodate the battery cells 20 and the cell-level inverter unit 22, the battery cell unit 18 comprises a frame 46.

The frame 46 comprises a slot-shaped recess 48 in which the cell-level inverter unit 22 is accommodated. As it can be seen from Figure 5, the slot-shaped recess 48 is open along the assembly direction 44. In other words, the slot shaped recess 48 is accessibly from two opposite sides such that the cell-level inverter unit 22 can be reversibly inserted and removed from the slot-shaped recess 48 by moving the cell-level inverter unit 22 along the assembly direction 44.

Adjacent to the slot-shaped recess 48, the frame 46 comprises an array of recesses 50 for accommodating the battery cells 20.

The frame 46 may be an integral component, i.e. formed by a single part. Alternatively, the frame may be formed from two or more parts.

Preferably, the frame 46 is made of a plastics material.

Further, the battery cell unit 18 comprises a connection component 52 which is mechanically and electrically connected to the one or more battery cells 20. In addition, the connection component 52 is connected to the cell-level inverter unit 22 as shown in Figure 5.

In more detail, the cell-level inverter unit 22 comprises a PCB board 54 for transforming DC current from one or battery cells 20 in AC current which the conducted by the cell-level inverter unit to the busbars 24 in an assembled state.

To protect the PCB board 54 from environmental influences and to facilitate the assembly and disassemble of the cell-level inverter unit 22 from the battery assembly 12, the PCB 54 is accommodated in a sleeve 56.

The sleeve 56 may be a plastics or metal housing which is open along the assembly direction 44 such that the sides of the cell-level inverter units 22 are protected.

In more detail, the cell-level inverter unit 22 may be locked in the slot-shaped recess 48 by a locking element 58. In particular, the locking element 58 may be configured to reversibly connect the cell-level inverter unit 22 in the slot-shaped recess 48. In particular, locking element 58 is configured to prevent loss of the cell-level inverter unit 22.

For example, the locking element 58 may be a glue connection, a plug-in-connection, a snap-in-connection, a bayonet mount, a spring-loaded connection, a magnetic connection or a screw connection.

The locking element 58 is best shown in Fig. 4.

Moreover, the cell-level inverter unit 22 may comprise a stop element 59 to lock the cell-level inverter unit 22 in a pre-defined mounting position. As it can be seen from Fig. 6, the stop element 59 may be a metal plate which extends at least partially in a plane which is orthogonal to the assembly direction 44.

When the cell-level inverter unit 22 is completely inserted in the slot-shaped recess 46 as shown in Fig. 5, the cell-level inverter unit 22 is electrically connected to the connection component 52 via a plug-in connection 60 such that the cell-level inverter unit 22 may be selectively electrically connected to the connection component 52.

So to say, using a plug-in connection 60 means that the cell-level inverter unit 22 is selectively electrically connected or separated from the connection component 52.

Furthermore, the cell-level inverter unit 22 can be selectively electrically connected or separated from the at least one busbar 24 by moving the cell-level inverter unit 22 along an assembly direction 44 as shown in Fig. 6. In the present example, the cell-level inverter unit 22 is connected to two busbars 24.

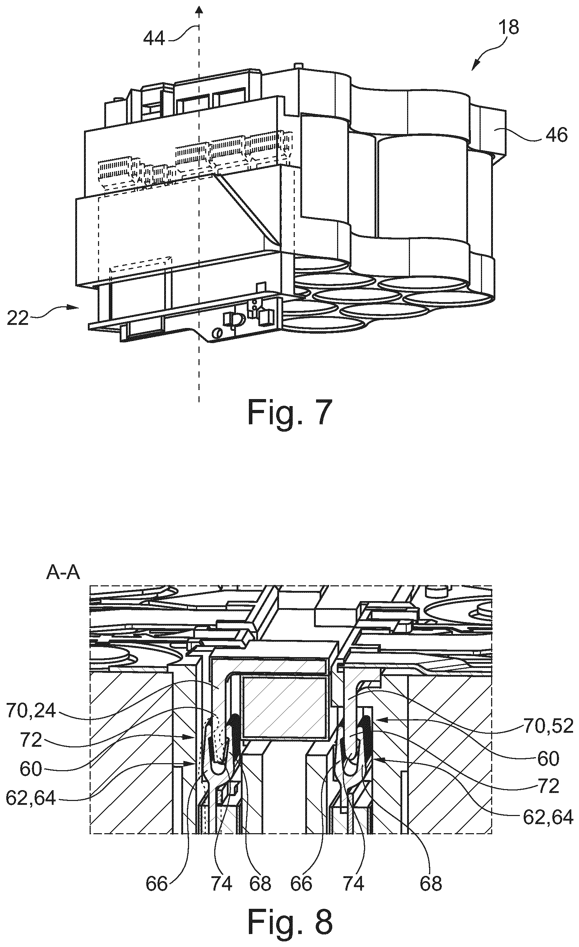

In the embodiment shown in Figs. 6 and 7, the cell-level inverter unit 22 comprises four plug-in connections 60 for connecting the cell-level inverter unit 22 to two busbars 24 and two plug-in connections 60 for connecting the cell-level inverter unit 22 to two terminals of the connection component 52. Moreover, the cell-level inverter unit 22 comprises two plug-in connections 60 for providing DC power.

For forming the plug-in connection 60, the cell-level inverter unit 22 comprises at least one plug-in element 62.

In the following, the plug-in connection 60 between the cell-level inverter unit 22 and the connection component 52 is described with reference to Fig. 8.

The plug-in element 62 may be designated as female part of the plug-in connection 60, wherein the connection component 52 may be designated as the male part of the plug-in connection 60.

In detail, the plug-in element 62 of the cell inverter unit 22 may be a clamping unit 64, the clamping unit 64 comprises a first clamping arm 66 and a second clamping arm 68 for establishing the plug-in-connection 60 with an electric counterpart 70 by receiving the electric counterpart 70 between the first clamping arm 66 and the second clamping arm 68.

The electric counterpart 70 may be designated as the connection component 52. The electric counterpart 70 has a plate-shaped body 72, wherein one side 74 of the plate-shaped body 72 is tapering. The one side 74 is the free end of the counterpart 70 which can be engaged with the plug-in element 62 to form the plug-in connection 60.

Next, the plug-in connection 60 between the cell-level inverter unit 22 and the busbar 24 is described.

As is shown in Figure 8, the busbar 24 may also be designated as the electric counterpart 70 for establishing an electric connection with the plug-in element 62, in particular, with the clamping unit 64 of the cell-level inverter unit 22.

As it can be seen in Fig. 8, both the busbar 24 and the connection component 52 may be designated as counterparts 70. Preferably, both counterparts 70 are structurally the same.

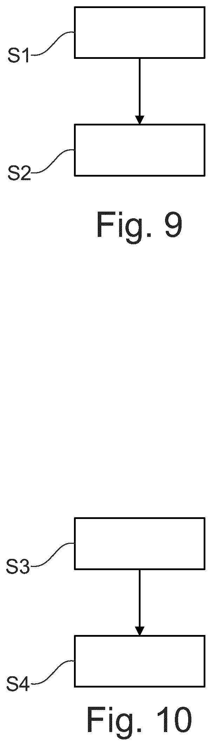

Figure 9 shows the schematic steps of a method for dismounting a cell-level inverter unit 22 from a battery assembly 12 for a vehicle 10.

As has been mentioned before, the battery assembly 12 comprises at least one battery cell unit 18 and at least one busbar 24 electrically coupled to the battery cell unit 18. The at least one battery cell unit 18 comprises one or more battery cells 20. The connection component 52 is mechanically and electrically connected to the one or more battery cells 20, and the cell-level inverter unit 22. The cell-level inverter unit 22 is electrically connected to the connection component 52 and to the at least one busbar 24.

The method comprise removing S1 the lid 42 from the enclosure 32 of the battery assembly 12.

Additionally, the method comprises the step of un-plugging S2 the cell-level inverter unit 22 from the connection component 52 and the busbar 24 by moving the cell-level inverter unit 22 along the assembly direction 44. This step is best shown in Figs. 6 and 7.

Preferably, the assembly direction 44 is oriented substantially vertically.

Fig. 10 shows the steps of a method for mounting the cell-level inverter unit 22 in a battery assembly 12 for a vehicle 10.

The battery assembly 12 comprises at least one battery cell unit 18 and at least one busbar 24 electrically coupled to the battery cell unit 18. The at least one battery cell unit 18 comprises one or more battery cells 20, and the connection component 52 mechanically and electrically connected to the one or more battery cells 20.

The method comprises the step of plugging S3 the cell-level inverter unit 22 into the connection component 52 and onto the at least one busbar 24, by moving the cell-level inverter unit 22 along the assembly direction 44. This step is best shown in Figs. 6 and 7.

The method further comprises the step of closing S4 an enclosure 32 of the battery assembly 12 using a lid 42.

Preferably, the assembly direction 44 is oriented substantially vertically.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: battery assembly
- 14: bottom
- 16: battery string.
- 18: battery cell unit
- 20: battery cells
- 22: cell-level inverter units
- 24: busbar
- 26: busbar element
- 28: arrangement direction
- 30: terminal
- 32: enclosure
- 34: bottom wall
- 36: side walls
- 38: battery chamber
- 40: maintenance opening
- 42: lid
- 44: assembly direction
- 46: frame
- 48: slot-shaped
- 50: hexagonal array of recesses
- 52: connector component
- 54: PCB board
- 56: sleeve
- 58: locking element
- 59: stop element
- 60: plug-in connection
- 62: plug-in element
- 64: clamping unit
- 66: first clamping arm
- 68: second clamping arm
- 70: counterpart
- 72: plate-shaped body
- 74: one side

- S1: removing
- S2: unplugging

- S3: plugging
- S4: closing

## Claims

1. A battery assembly (12) for a vehicle (10), the battery assembly (12) comprising at least one battery cell unit (18) and at least one busbar (24) electrically coupled to the battery cell unit (18),
wherein the at least one battery cell unit (18) comprises one or more battery cells (20), a connection component (52) mechanically and electrically connected to the one or more battery cells (20), and a cell-level inverter unit (22),
wherein the cell-level inverter unit (22) is electrically connected to the connection component (52) and to the at least one busbar (24) via a plug-in connection such that the cell-level inverter unit (22) may be selectively electrically connected or separated from the connection component (52) and the at least one busbar (24) by moving the cell-level inverter unit (22) along an assembly direction (44).

2. The battery assembly (12) according to claim 1, wherein each battery cell unit (18) further comprises a frame (46) with a slot-shaped recess (48) in which the cell-level inverter unit (22) is accommodated, wherein the slot-shaped recess (48) is open along the assembly direction (44).

3. The battery assembly (12) according to claim 2, wherein the cell-level inverter unit (22) or the frame (44) comprises at least one locking element (58) configured to selectively lock the cell-level inverter unit (22) in the slot-shaped recess (48).

4. The battery assembly (12) according to any one of the preceding claims, comprising a plurality battery cell units (18) electrically interconnected via a plurality of busbars (24), wherein the assembly directions (44) of the respective cell-level inverter units extend in parallel and/or wherein at least some of the cell-level inverter units (22) are arranged along an arrangement direction (28).

5. The battery assembly (12) according to any one of the preceding claims, further comprising an enclosure (32) housing the one or more battery cell units (18),
wherein the enclosure (32) comprises one maintenance opening (40) per cell-level inverter unit (22) configured for withdrawing the cell-level inverter unit (22) from the associated battery cell unit (18), or
wherein the enclosure (32) comprises one maintenance opening (40) for a plurality of cell-level inverter units (22) configured for withdrawing the associated cell-level inverter units (22).

6. The battery assembly (12) of claim 5, wherein the maintenance opening (40) is closed by a lid (42).

7. The battery assembly (12) of claim 5 or 6, wherein the maintenance openings (40) are facing downwards in a use orientation of the battery assembly (12).

8. A vehicle (10) comprising the battery assembly (12) according to any one of the preceding claims.

9. A cell-level inverter unit (22) for a battery assembly of any one of claims 1 to 7, the cell-level inverter unit (22) comprising a plug-in element (62) for plugging the cell-level inverter unit (22) into the connection component (52) and onto the at least one busbar (24).

10. A method for dismounting a cell-level inverter unit (22) from a battery assembly (12) for a vehicle (10), the battery assembly (12) comprising at least one battery cell unit (18) and at least one busbar (24) electrically coupled to the battery cell unit (18), wherein the at least one battery cell unit (18) comprises one or more battery cells (20), a connection component (52) mechanically and electrically connected to the one or more battery cells (20), and a cell-level inverter unit (22), wherein the cell-level inverter unit (22) is electrically connected to the connection component (52) and to the at least one busbar (24), the method comprising:
un-plugging (S1) the cell-level inverter unit (22) from the connection component (52) and
the busbar (24) by moving the cell-level inverter unit (22) along an assembly direction (44).

11. The method of claim 10, further comprising: removing (S2) a lid (42) from an enclosure (32) of the battery assembly (12).

12. The method of claim 10 or 11, wherein the assembly direction (44) is oriented substantially vertically.

13. A method for mounting a cell-level inverter unit (22) in a battery assembly (12) for a vehicle (10), the battery assembly (12) comprising at least one battery cell unit (18) and at least one busbar (24) electrically coupled to the battery cell unit (18), wherein the at least one battery cell unit (18) comprises one or more battery cells (20), and a connection (52) mechanically and electrically connected to the one or more battery cells (20), the method comprising:
plugging the cell-level inverter unit (22) into the connection component (52) and onto the at least one busbar (24), by moving the cell-level inverter unit (22) along an assembly direction (44).

14. The method of claim 13, further comprising:
closing an enclosure (32) of the battery assembly (12) using a lid (42).

15. The method of claim 13 or 14, wherein the assembly direction (44) is oriented substantially vertically.
